# EUROPEAN PATENT APPLICATION

(11) **EP 4 159 610 A1**
(43) Date of publication of application: **05.04.2023**
(21) Application number: 21813333.8
(22) Date of filing: 25.05.2021
(51) Int. Cl.: B63B 15/02, B63B 25/16, F17C 13/00

(54) **VENT MAST**

(30) Priority: 25.05.2020 JP 2020090259
(71) Applicant: KAWASAKI JUKOGYO KABUSHIKI KAISHA, Kobe-shi, Hyogo 650-8670 (JP)
(72) Inventor: MURAGISHI, Osamu, Hyogo, 650-8670 (JP); OHASHI, Tetsuya, Hyogo, 650-8670 (JP); UNNO, Shuntaro, Hyogo, 650-8670 (JP); KAMENO, Yuichi, Hyogo, 650-8670 (JP); OSAKI, Naoto, Hyogo, 650-8670 (JP)
(74) Representative: Dehns
(86) International application number: PCT/JP2021/019828
(87) International publication number: WO 2021/241588

(57) **Abstract**

A vent mast 5 of a liquefied hydrogen carrier according to one embodiment includes: a mast body 6; a discharge pipe 8 located above the mast body 6; and a bulged duct 7, which connects the mast body 6 and the discharge pipe 8. A funnel 9 is located in the bulged duct 7. The funnel 9 receives rain that enters the bulged duct 7 through the discharge pipe 8. A length L of the discharge pipe 8 is greater than an internal diameter D of the discharge pipe 8.

## Description

### Technical Field

The present disclosure relates to a vent mast of a liquefied hydrogen carrier.

### Background Art

In recent years, the development of liquefied hydrogen carriers for transporting liquefied hydrogen has been carried out. For example, Patent Literature 1 discloses a liquefied hydrogen carrier including a tank mounted in the hull thereof. The tank stores liquefied hydrogen.

The liquefied hydrogen carrier disclosed in Patent Literature 1 includes a vent mast for discharging boil off gas (hydrogen gas) generated in the tank into the atmosphere.

### Citation List

### Patent Literature

PTL 1: Japanese Laid-Open Patent Application Publication No. 2018-204721

### Summary of Invention

### Technical Problem

An LNG (Liquefied Natural Gas) carrier also includes a vent mast for discharging boil off gas (NG) generated in the tank into the atmosphere. The distal end of the vent mast is bulged. A funnel that receives rain is located inside the bulged distal end.

The vent mast of a hydrogen carrier may be the same in structure as the vent mast for discharging NG. However, the flammability range of hydrogen is wider than that of NG. For this reason, it is desired for the vent mast of a hydrogen carrier to discharge the hydrogen gas to a relatively far distance from the vent mast as compared to the vent mast for discharging NG.

In view of the above, an object of the present disclosure is to provide a vent mast that makes it possible to discharge hydrogen gas to a relatively far distance from the vent mast.

### Solution to Problem

In order to solve the above-described problem, a vent mast according to one aspect of the present disclosure is a vent mast of a liquefied hydrogen carrier, the vent mast including: a mast body; a discharge pipe located above the mast body; a bulged duct that connects the mast body and the discharge pipe; and a funnel that is located in the bulged duct and that receives rain that enters the bulged duct through the discharge pipe. A length of the discharge pipe is greater than an internal diameter of the discharge pipe.

According to the above configuration, since the length of the discharge pipe is greater than the internal diameter of the discharge pipe, hydrogen gas that is discharged through the discharge pipe is suppressed from diffusing in the horizontal direction, but is discharged straight upward. This makes it possible to discharge the hydrogen gas to a relatively far distance from the vent mast.

A vent mast according to another aspect of the present disclosure is a vent mast of a liquefied hydrogen carrier, the vent mast including: a mast body; a discharge pipe located above the mast body; a bulged duct that connects the mast body and the discharge pipe; and a funnel that is located in the bulged duct and that receives rain that enters the bulged duct through the discharge pipe. The duct includes: a diameter-enlarged portion that is enlarged in diameter upward from the mast body; a diameter-reduced portion that is reduced in diameter upward toward the discharge pipe; and a tubular portion located between the diameter-enlarged portion and the diameter-reduced portion.

According to the above configuration, a pressure loss that occurs when hydrogen gas flows along the inner surface of the bulged duct in a manner to bypass the funnel can be reduced as compared to a case where the tubular portion is absent. Consequently, the flow velocity of the hydrogen gas at the distal end of the discharge pipe increases, which makes it possible to discharge the hydrogen gas to a relatively far distance from the vent mast.

A vent mast according to yet another aspect of the present disclosure is a vent mast of a liquefied hydrogen carrier, the vent mast including: a mast body; a discharge pipe located above the mast body; a bulged duct that connects the mast body and the discharge pipe; and a funnel that is located in the bulged duct and that receives rain that enters the bulged duct through the discharge pipe. The duct includes: a diameter-enlarged portion that is enlarged in diameter upward from the mast body; and a diameter-reduced portion that is reduced in diameter upward toward the discharge pipe. An angle of the diameter-enlarged portion relative to a vertical direction is 30 degrees or less.

According to the above configuration, a pressure loss that occurs when hydrogen gas flows along the inner surface of the bulged duct in a manner to bypass the funnel can be reduced as compared to a case where the angle of the diameter-enlarged portion is greater than 30 degrees. Consequently, the flow velocity of the hydrogen gas at the distal end of the discharge pipe increases, which makes it possible to discharge the hydrogen gas to a relatively far distance from the vent mast.

### Advantageous Effects of Invention

The present disclosure makes it possible to discharge the hydrogen gas to a relatively far distance from the vent mast.

### Brief Description of Drawings

FIG. 1 is a side view of a liquefied hydrogen carrier including a vent mast according to one embodiment of the present disclosure.
FIG. 2 is a sectional view of a distal end part of the vent mast.

### Description of Embodiments

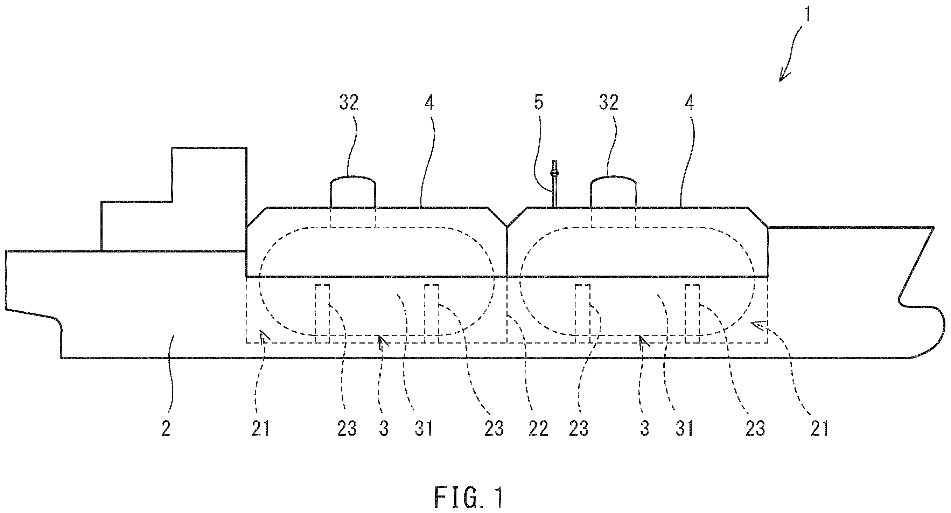

FIG. 1 shows a liquefied hydrogen carrier 1 including a vent mast 5 according to one embodiment of the present disclosure. The liquefied hydrogen carrier 1 includes a hull 2 and two tanks 3 mounted in the hull 2. In the present embodiment, the tanks 3 are located side by side in the ship length direction. Alternatively, in a case where the ship has a wide width, the tanks 3 may be located side by side in the ship width direction. The number of tanks 3 mounted in the hull 2 may be one, or three or more.

For example, each tank 3 is a double-shell tank in which there is a vacuum space between an inner shell and an outer shell of the tank. Alternatively, each tank 3 may be a single shell tank covered by a thermal insulator.

In the present embodiment, each tank 3 is a horizontally long cylindrical tank. Alternatively, each tank 3 may have a spherical, cubic, or rectangular parallelepiped shape.

Specifically, each tank 3 includes a main tank structure 31 and a dome 32. Liquefied hydrogen is stored in the main tank structure 31. The dome 32 protrudes upward from the main tank structure 31. To be more specific, the main tank structure 31 includes a body and hemispherical sealing portions. The body extends in the ship length direction with a constant cross-sectional shape, and the hemispherical sealing portions seal openings on both sides of the body. Alternatively, each sealing portion may have a flat shape perpendicular to the body, or may be dish-shaped. The dome 32 is intended for putting pipes penetrating the tank 3 into one place.

The hull 2 includes two cargo holds 21, which are open upward. The cargo holds 21 are located side by side in the ship length direction, and are partitioned off from each other by a bulkhead 22. Each of the tanks 3 is located inside a corresponding one of the cargo holds 21.

A pair of saddles 23 is located inside each cargo hold 21. The saddles 23 are spaced apart from each other in the ship length direction. The saddles 23 support the tanks 3. Tank covers 4 are located above the respective tanks 3. Each of the tank covers 4 covers, from above, the main tank structure 31 of a corresponding one of the tanks 3. The domes 32 penetrate the respective tank covers 4.

The aforementioned vent mast 5 is located on one tank cover 4. Alternatively, the vent mast 5 may be located on an upper deck around the cargo holds 21. The vent mast 5 is intended for discharging boil off gas (hydrogen gas) generated in the tanks 3 into the atmosphere.

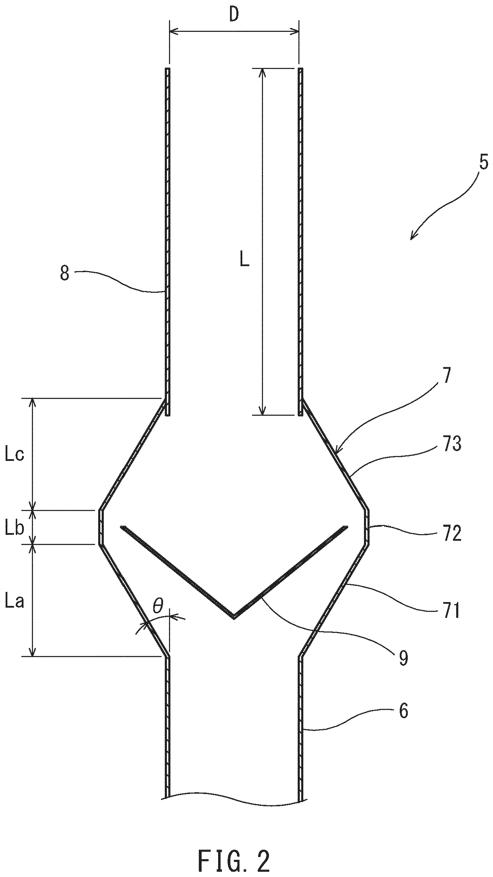

As shown in FIG. 2, the vent mast 5 includes: a mast body 6, which rises from the tank cover 4; a discharge pipe 8 located above the mast body 6; and a bulged duct 7, which connects the mast body 6 and the discharge pipe 8.

The discharge pipe 8 is located coaxially with the mast body 6. The bulged duct 7 is bulged radially outward relative to the mast body 6 and the discharge pipe 8. Although not illustrated, a mesh for preventing the entrance of birds is attached to the distal end (upper end) of the discharge pipe 8. In the present embodiment, the length L of the discharge pipe 8 is greater than the internal diameter D of the discharge pipe 8.

A funnel 9 is located in the bulged duct 7. The funnel 9 receives rain that enters the bulged duct 7 through the discharge pipe 8. The funnel 9 has a V-shaped cross section. The diameter of the upper end of the funnel 9 is greater than the internal diameter D of the discharge pipe 8. The funnel 9 is supported by an unshown support on the bulged duct 7.

The bulged duct 7 includes a diameter-enlarged portion 71, a diameter-reduced portion 73, and a tubular portion 72. The diameter-enlarged portion 71 is enlarged in diameter upward from the mast body 6. The diameter-reduced portion 73 is reduced in diameter upward toward the discharge pipe 8. The tubular portion 72 is located between the diameter-enlarged portion 71 and the diameter-reduced portion 73. The upper end of the diameter-enlarged portion 71 is connected to the outer peripheral surface of the discharge pipe 8 at a position that is slightly above the lower end of the discharge pipe 8 so that rain that enters the discharge pipe 8 will drip from the lower end of the discharge pipe 8.

In the present embodiment, in the vertical direction, the upper end of the funnel 9 is positioned between the lower end and the upper end of the tubular portion 72. Alternatively, the upper end of the funnel 9 may be positioned below the lower end of the tubular portion 72, or may be positioned above the upper end of the tubular portion 72.

In the present embodiment, in the vertical direction, the length La of the diameter-enlarged portion 71 is greater than the length Lc of the diameter-reduced portion 73 (La > Lc), and the length Lb of the tubular portion 72 is less than the length Lc of the diameter-reduced portion 73 (Lb < Lc). Alternatively, the length La of the diameter-enlarged portion 71 may be less than the length Lc of the diameter-reduced portion 73.

In the present embodiment, the angle θ of the diameter-enlarged portion 71 relative to the vertical direction (i.e., an angle at which the diameter of the diameter-enlarged portion 71 is enlarged) is 30 degrees or less. Alternatively, the angle θ of the diameter-enlarged portion 71 may be greater than 30 degrees.

As described above, according to the vent mast 5 of the present embodiment, since the length L of the discharge pipe 8 is greater than the internal diameter D of the discharge pipe 8, the hydrogen gas that is discharged through the discharge pipe 8 is suppressed from diffusing in the horizontal direction, but is discharged straight upward. This makes it possible to discharge the hydrogen gas to a relatively far distance from the vent mast 5.

Further, in the present embodiment, since the tubular portion 72 is located between the diameter-enlarged portion 71 and the diameter-reduced portion 73 of the bulged duct 7, a pressure loss that occurs when the hydrogen gas flows along the inner surface of the bulged duct 7 in a manner to bypass the funnel 9 can be reduced as compared to a case where the tubular portion 72 is absent. Consequently, the flow velocity of the hydrogen gas at the distal end of the discharge pipe 8 increases, which makes it possible to enhance the advantageous effect of being able to discharge the hydrogen gas to a relatively far distance from the vent mast 5.

In particular, according to the present embodiment, since the region between the upper end of the funnel 9 and the tubular portion 72 is a narrow region, the pressure loss at the narrow region can be reduced.

Further, in the present embodiment, the angle θ of the diameter-enlarged portion 71 is 30 degrees or less. Accordingly, the pressure loss that occurs when the hydrogen gas flows along the inner surface of the bulged duct 7 in a manner to bypass the funnel 9 can be reduced as compared to a case where the angle θ of the diameter-enlarged portion 71 is greater than 30 degrees. Consequently, the flow velocity of the hydrogen gas at the distal end of the discharge pipe 8 further increases, which makes it possible to further enhance the advantageous effect of being able to discharge the hydrogen gas to a relatively far distance from the vent mast 5.

### (Variations)

The present disclosure is not limited to the above-described embodiment. Various modifications can be made without departing from the scope of the present disclosure.

For example, the tubular portion 72 may be eliminated from the bulged duct 7, and the upper end of the diameter-enlarged portion 71 may be connected to the lower end of the diameter-reduced portion 73.

In a case where the bulged duct 7 includes the tubular portion 72, the length L of the discharge pipe 8 may be less than the internal diameter D of the discharge pipe 8. Even with such a configuration, the pressure loss that occurs when the hydrogen gas flows along the inner surface of the bulged duct 7 in a manner to bypass the funnel 9 can be reduced. Consequently, the flow velocity of the hydrogen gas at the distal end of the discharge pipe 8 increases, which makes it possible to discharge the hydrogen gas to a relatively far distance from the vent mast 5.

Further, in a case where the angle θ of the diameter-enlarged portion 71 of the bulged duct 7 is 30 degrees or less, the tubular portion 72 may be eliminated from the bulged duct 7, and the length L of the discharge pipe 8 may be less than the internal diameter D of the discharge pipe 8. Even with such a configuration, the pressure loss that occurs when the hydrogen gas flows along the inner surface of the bulged duct 7 in a manner to bypass the funnel 9 can be reduced as compared to a case where the angle θ of the diameter-enlarged portion 71 is greater than 30 degrees. Consequently, the flow velocity of the hydrogen gas at the distal end of the discharge pipe 8 increases, which makes it possible to discharge the hydrogen gas to a relatively far distance from the vent mast 5.

### (Summary)

A vent mast according to one aspect of the present disclosure is a vent mast of a liquefied hydrogen carrier, the vent mast including: a mast body; a discharge pipe located above the mast body; a bulged duct that connects the mast body and the discharge pipe; and a funnel that is located in the bulged duct and that receives rain that enters the bulged duct through the discharge pipe. A length of the discharge pipe is greater than an internal diameter of the discharge pipe.

According to the above configuration, since the length of the discharge pipe is greater than the internal diameter of the discharge pipe, hydrogen gas that is discharged through the discharge pipe is suppressed from diffusing in the horizontal direction, but is discharged straight upward. This makes it possible to discharge the hydrogen gas to a relatively far distance from the vent mast.

The duct may include: a diameter-enlarged portion that is enlarged in diameter upward from the mast body; a diameter-reduced portion that is reduced in diameter upward toward the discharge pipe; and a tubular portion located between the diameter-enlarged portion and the diameter-reduced portion. According to this configuration, a pressure loss that occurs when the hydrogen gas flows along the inner surface of the bulged duct in a manner to bypass the funnel can be reduced as compared to a case where the tubular portion is absent. Consequently, the flow velocity of the hydrogen gas at the distal end of the discharge pipe increases, which makes it possible to enhance the advantageous effect of being able to discharge the hydrogen gas to a relatively far distance from the vent mast.

In a vertical direction, an upper end of the funnel may be positioned between a lower end and an upper end of the tubular portion. According to this configuration, since the region between the upper end of the funnel and the tubular portion is a narrow region, the pressure loss at the narrow region can be reduced.

For example, in a vertical direction, a length of the diameter-enlarged portion may be greater than a length of the diameter-reduced portion.

An angle of the diameter-enlarged portion relative to a vertical direction may be 30 degrees or less. According to this configuration, the pressure loss that occurs when the hydrogen gas flows along the inner surface of the bulged duct in a manner to bypass the funnel can be reduced as compared to a case where the angle of the diameter-enlarged portion is greater than 30 degrees. Consequently, the flow velocity of the hydrogen gas at the distal end of the discharge pipe further increases, which makes it possible to further enhance the advantageous effect of being able to discharge the hydrogen gas to a relatively far distance from the vent mast.

A vent mast according to another aspect of the present disclosure is a vent mast of a liquefied hydrogen carrier, the vent mast including: a mast body; a discharge pipe located above the mast body; a bulged duct that connects the mast body and the discharge pipe; and a funnel that is located in the bulged duct and that receives rain that enters the bulged duct through the discharge pipe. The duct includes: a diameter-enlarged portion that is enlarged in diameter upward from the mast body; a diameter-reduced portion that is reduced in diameter upward toward the discharge pipe; and a tubular portion located between the diameter-enlarged portion and the diameter-reduced portion.

According to the above configuration, a pressure loss that occurs when hydrogen gas flows along the inner surface of the bulged duct in a manner to bypass the funnel can be reduced as compared to a case where the tubular portion is absent. Consequently, the flow velocity of the hydrogen gas at the distal end of the discharge pipe increases, which makes it possible to discharge the hydrogen gas to a relatively far distance from the vent mast.

In a vertical direction, an upper end of the funnel may be positioned between a lower end and an upper end of the tubular portion. According to this configuration, since the region between the upper end of the funnel and the tubular portion is a narrow region, the pressure loss at the narrow region can be reduced.

For example, in a vertical direction, a length of the diameter-enlarged portion may be greater than a length of the diameter-reduced portion.

A vent mast according to yet another aspect of the present disclosure is a vent mast of a liquefied hydrogen carrier, the vent mast including: a mast body; a discharge pipe located above the mast body; a bulged duct that connects the mast body and the discharge pipe; and a funnel that is located in the bulged duct and that receives rain that enters the bulged duct through the discharge pipe. The duct includes: a diameter-enlarged portion that is enlarged in diameter upward from the mast body; and a diameter-reduced portion that is reduced in diameter upward toward the discharge pipe. An angle of the diameter-enlarged portion relative to a vertical direction is 30 degrees or less.

According to the above configuration, a pressure loss that occurs when hydrogen gas flows along the inner surface of the bulged duct in a manner to bypass the funnel can be reduced as compared to a case where the angle of the diameter-enlarged portion is greater than 30 degrees. Consequently, the flow velocity of the hydrogen gas at the distal end of the discharge pipe increases, which makes it possible to discharge the hydrogen gas to a relatively far distance from the vent mast.

### Reference Signs List

- 1: liquefied hydrogen carrier
- 5: vent mast
- 6: mast body
- 7: bulged duct
- 71: diameter-enlarged portion
- 72: tubular portion
- 73: diameter-reduced portion
- 8: discharge pipe
- 9: funnel

## Claims

1. A vent mast of a liquefied hydrogen carrier, the vent mast comprising:
a mast body;
a discharge pipe located above the mast body;
a bulged duct that connects the mast body and the discharge pipe; and
a funnel that is located in the bulged duct and that receives rain that enters the bulged duct through the discharge pipe, wherein
a length of the discharge pipe is greater than an internal diameter of the discharge pipe.

2. The vent mast according to claim 1, wherein
the duct includes:
a diameter-enlarged portion that is enlarged in diameter upward from the mast body;
a diameter-reduced portion that is reduced in diameter upward toward the discharge pipe; and
a tubular portion located between the diameter-enlarged portion and the diameter-reduced portion.

3. The vent mast according to claim 2, wherein
in a vertical direction, an upper end of the funnel is positioned between a lower end and an upper end of the tubular portion.

4. The vent mast according to claim 2 or 3, wherein
in a vertical direction, a length of the diameter-enlarged portion is greater than a length of the diameter-reduced portion.

5. The vent mast according to any one of claims 2 to 4, wherein
an angle of the diameter-enlarged portion relative to a vertical direction is 30 degrees or less.

6. A vent mast of a liquefied hydrogen carrier, the vent mast comprising:
a mast body;
a discharge pipe located above the mast body;
a bulged duct that connects the mast body and the discharge pipe; and
a funnel that is located in the bulged duct and that receives rain that enters the bulged duct through the discharge pipe, wherein
the duct includes:
a diameter-enlarged portion that is enlarged in diameter upward from the mast body;
a diameter-reduced portion that is reduced in diameter upward toward the discharge pipe; and
a tubular portion located between the diameter-enlarged portion and the diameter-reduced portion.

7. The vent mast according to claim 4, wherein
in a vertical direction, an upper end of the funnel is positioned between a lower end and an upper end of the tubular portion.

8. The vent mast according to claim 6 or 7, wherein
in a vertical direction, a length of the diameter-enlarged portion is greater than a length of the diameter-reduced portion.

9. A vent mast of a liquefied hydrogen carrier, the vent mast comprising:
a mast body;
a discharge pipe located above the mast body;
a bulged duct that connects the mast body and the discharge pipe; and
a funnel that is located in the bulged duct and that receives rain that enters the bulged duct through the discharge pipe, wherein
the duct includes:
a diameter-enlarged portion that is enlarged in diameter upward from the mast body; and
a diameter-reduced portion that is reduced in diameter upward toward the discharge pipe, and
an angle of the diameter-enlarged portion relative to a vertical direction is 30 degrees or less.
